# EUROPÄISCHE PATENTSCHRIFT

(11) **EP 1 554 475 B1**
(45) Veröffentlichungstag und Bekanntmachung des Hinweises auf die Patenterteilung: **12.07.2006**
(21) Anmeldenummer: 03808662.5
(22) Anmeldetag: 24.06.2003
(51) Int. Cl.: F01N 11/00, G01N 15/06, F01N 3/02, F01N 3/021

(54) **VERFAHREN UND SYSTEM ZUR ÜBERPRÜFUNG DER FUNKTIONSFÄHIGKEIT EINES TEILCHENDETEKTORS**
METHOD AND SYSTEM FOR VERIFYING THE FUNCTIONALITY OF A PARTICLE DETECTOR
PROCEDE ET SYSTEME POUR CONTROLER LE BON FONCTIONNEMENT D'UN DETECTEUR DE PARTICULES

(30) Priorität: 15.10.2002 DE 10247977
(43) Veröffentlichungstag der Anmeldung: 20.07.2005
(73) Patentinhaber: ROBERT BOSCH GMBH, 70442 Stuttgart (DE)
(72) Erfinder: SCHUMANN, Bernd, 71277 Rutesheim (DE)
(86) Internationale Anmeldenummer: PCT/DE2003/002097
(87) Internationale Veröffentlichungsnummer: WO 2004/036006

(56) Entgegenhaltungen:
- EP-A- 0 506 083
- WO-A-03/006976
- DE-A- 19 853 841
- US-A- 5 157 340
- PATENT ABSTRACTS OF JAPAN vol. 017, no. 117 (M-1378), 11. März 1993 (1993-03-11) & JP 04 301125 A (MATSUSHITA ELECTRIC IND CO LTD), 23. Oktober 1992 (1992-10-23)

## Beschreibung

Die Erfindung betrifft ein Verfahren und ein System zur Überprüfung der Funktionsfähigkeit eines Teilchendetektors unter Verwendung eines dem Teilchendetektor in Strömungsrichtung vorgeschalteten Teilchenfilters. Darüber hinaus betrifft die Erfindung ein hierfür geeignetes Computerprogramm (-produkt).

### Stand der Technik

Die Konzentration von Teilchen, insbesondere von Rußteilchen bei Diesel-Verbrennungsmaschinen, wird häufig mit elektrischen Methoden gemessen. Beispielsweise ist aus der DE 198 53 841 A1 ein Sensor zur Detektion von Rußpartikeln bekannt, der eine erste Hochspannungselektrode und eine zweite Masseelektrode umfasst. Beim Betrieb wird der Raum zwischen den Elektroden vom Abgas durchströmt, wobei als Maß für die Konzentration von Rußpartikeln im Abgas entweder diejenige elektrische Spannung, ab der Funken zwischen den beiden Elektroden auftreten, oder aber bei konstant gehaltener elektrischer Spannung die Größe des zwischen den beiden Elektroden fließenden Ionisationsstroms herangezogen wird. Weitere Möglichkeiten sind das Aufladen der Teilchen durch eine Ionisationsquelle, wie eine Koronaentladung, oder durch den Verbrennungsprozess selbst. Die geladenen Teilchen werden dann durch eine geeignete Detektorstruktur (Gitter) geführt und können ihre Ladung dort wieder abgeben. Der gemessene Strom ist somit ein Maß für die von den Teilchen aufgenommene Ladung und bei bekanntem Ionisationsgrad der Teilchen auch ein Maß für die Anzahl der Teilchen, die den Detektor erreichen.

Ebenfalls können Teilchen, die nach einem der oben beschriebenen Verfahren aufgeladen worden sind oder durch einen Verbrennungsprozess von allein aufgeladen werden, eine Ladungsverschiebung in einer Detektorstruktur durch Influenz hervorrufen, die ihrerseits nachgewiesen werden kann. Die bekannten Detektionsverfahren nutzen somit die Messung kleiner Ströme oder Ladungsverschiebungen aus.

Aus verschiedenen Gründen (Erfüllung gesetzlicher Auflagen, Sicherheits- und Umweltaspekte) besteht der Bedarf, die oben genannten Detektionseinrichtungen auf ihre ordnungsgemäße Arbeitsweise zu überwachen. Das gilt insbesondere, da die zu detektierenden Ladungen oder Ladungsverschiebungen sehr klein sind und Störungen einen ordnungsgemäßen Betrieb vortäuschen können.

Aus der JP-A-04301125 ist ein Partikelfilter bekannt, das mit Mikrowellen beaufschlagt wird. Dabei wird die Menge gesammelter Teilchen ermittelt.

### Vorteile der Erfindung

Erfindungsgemäß werden bei der Regeneration des Teilchenfilters entstehende Partikel vom Teilchendetektor erfasst, und das resultierende Messergebnis wird mit einem zu erwartenden Ergebnis verglichen. Insbesondere kann das vom Teilchendetektor während der Messung gelieferte Signal beispielsweise kontinuierlich mit einem zu erwartenden Signal verglichen werden.

Häufig werden Teilchenfilter in bestimmten Zeitabständen oder periodisch regeneriert, um die ursprüngliche Filterkapazität wieder herzustellen. Beispielsweise werden Rußfilter periodisch freigebrannt, um an dem Rußfilter haftende Rußpartikel durch Oxidationsprozesse bei hohen Temperaturen vom Filter zu lösen. Erfindungsgemäß wird nun während dieser Regenerationsphase durch den Teilchendetektor eine Messung ausgeführt. Die während der Regeneration entstehenden Partikel werden erfasst und das resultierende Messergebnis wird mit dem zu erwartenden Ergebnis verglichen. Bestehen deutliche Abweichungen des Messergebnisses bezüglich des zu erwartenden Ergebnisses stellt dies in der Regel einen deutlichen Hinweis darauf dar, dass der Teilchendetektor fehlerhaft ist.

Durch die Erfindung kann die Funktion des Teilchendetektors in periodischen Abständen immer dann überwacht werden, wenn es auf die eigentliche Funktion des Teilchendetektors nicht ankommt, da ja die Teilchenkonzentration nur bei Normalbetrieb gemessen werden soll. Somit stellt die Erfindung sicher, dass während des Normalbetriebs der Teilchendetektor unterbrechungsfrei arbeiten kann, und dass während der Filterregeneration gleichzeitig die Funktionsfähigkeit des Teilchendetektors überprüft werden kann. Hierzu kann das zu erwartende Ergebnis der Messung des Teilchendetektors aufgrund des Füllstands des Teilchenfilters und der Regenerationsbedingungen bestimmt werden. Der bei der Regeneration des Teilchenfilters entstehende Partikelstrom hängt in erster Linie vom aktuellen Füllstand (Füllungsgrad) des Filters sowie von den Bedingungen der Regeneration ab. Hieraus kann ein Modell entwickelt werden, dass das zu erwartende Ergebnis der Messung des Teilchendetektors während der Regeneration bestimmbar macht.

Bei der Überprüfung der Funktionsfähigkeit von Rußdetektoren unter Verwendung eines Rußfilters, der in Strömungsrichtung dem Rußdetektor vorgeschaltet ist, und der durch Freibrennen regeneriert werden kann, ist es vorteilhaft, die während der Regeneration entstehenden Ionen vom Rußdetektor zu erfassen. Derartige Rußdetektoren arbeiten mit den bereits Eingangs beschriebenen Messmethoden.

In diesem Zusammenhang ist es vorteilhaft, die Temperatur in, am oder hinter dem Rußfilter zu messen und aus dem Füllstand des Rußfilters und der gemessenen Temperatur das zu erwartende Messergebnis oder Signal des Rußdetektors zu bestimmen. Hierzu wird ein Füllstandsmodell des Rußfilters erstellt und beispielsweise mit der gemessenen Abgastemperatur hinter dem Rußfilter korreliert. Mit steigender Abgastemperatur erhöht sich die Konzentration der Ionen, die dem Detektor zugeführt werden. Dies erlaubt einen Rückschluss auf das zu erwartende Ergebnis der Messung des Rußdetektors, das dann mit dem aktuell ermittelten Ergebnis verglichen werden kann.

Die Abweichung des zu erwartenden Signals/Messergebnis mit dem gemessenen Signal/Messergebnis wird vorzugsweise mit einem Grenzwert verglichen, bei dessen Überschreiten der Detektor als fehlerhaft eingestuft wird.

Es kann vorteilhaft sein, die Regenerationsbedingungen während der Überprüfung der Funktionsfähigkeit des Teilchendetektors zu verändern, um zuverlässigere Aussagen zu erhalten. Beispielsweise kann die Temperatur beim Freibrennen des Rußfilters erhöht werden, um eine höhere, aussagekräftigere Ionenkonzentration messen zu können. Wird beispielsweise eine Abgastemperatur von 500°C überschritten, so entstehen bei der Regeneration des Rußfilters Ionen im Abgasstrom auch nach dem Filter, wenn dieser insgesamt die höhere Temperatur angenommen hat. Diese Ionen werden dann in höherer Konzentration auch dem nachgeschalteten Teilchendetektor zugeführt. Hierbei haben sich Temperaturen zwischen 600°C und 1.000°C für das Freibrennen als vorteilhaft erwiesen.

Wird ein bestimmter Temperaturbereich bei der Regeneration durchfahren, ohne dass die Ionenzahl anwächst, liegt mit hoher Wahrscheinlichkeit ein Detektorfehler vor.

Die Erfindung schlägt weiterhin ein System zur Überprüfung der Funktionsfähigkeit eines Teilchendetektors mit einem in Strömungsrichtung einem Teilchenfilter nachgeschaltetem Teilchendetektor vor, bei dem eine Steuer- und Auswerteeinrichtung vorgesehen ist, die während der Regeneration des Teilchenfilters vom Teilchendetektor gelieferte Messergebnisse erfasst und mit zu erwartenden Ergebnissen vergleicht.

Weiterhin ist die Steuer- und Auswerteeinrichtung mit Vorteil derart ausgelegt, dass mittels eines vorgegebenen Modells aus der aktuellen Filterbeladung (Filterfüllstand) und den jeweiligen Regenerationsbedingungen das zu erwartende Messergebnis bestimmt werden kann.

Bei der Regeneration eines Rußfilters durch Freibrennen besteht ein derartiges Modell einfach aus der Korrelation des Füllstands (Filterbeladung) des Rußfilters und der Abgas- oder Filtertemperatur während der Regeneration. Der am Detektor gemessene Ionenstrom kann dann als Funktion dieser beiden Größen abgefasst werden. Ein solches Modell lässt sich beispielsweise empirisch ermitteln.

Es ist vorteilhaft, einen Temperatursensor in, am oder in Strömungsrichtung hinter den Teilchenfilter anzuordnen. Wird der Teilchenfilter durch Erhitzen oder Freibrennen regeneriert, liefert ein derartiger Temperatursensor einen wichtigen Parameter der Regenerierungsbedingungen.

Das genannte Verfahren lässt sich mittels eines Computerprogramms implementieren, das vorteilhaft in der genannten Steuer- und Auswerteeinrichtung zum Ablauf gebracht werden kann. Das Computerprogramm kann dafür sorgen, die jeweiligen Sensoren, wie den Teilchendetektor oder den Temperatursensor, zur geeigneten Zeit anzusprechen, die entsprechenden Daten aufzunehmen und/oder zu speichern. Das Computerprogramm kann aus einem vorgegebenen hinterlegten Modell zu erwartende Messerergebnisse bestimmen und mit den aktuell gemessenen Ergebnissen vergleichen. Abweichungen lassen sich in einfacher Weise mit vorgegebenen Grenzwerten vergleichen, woraus ein Rückschluss auf die Funktionsfähigkeit des Teilchendetektors gezogen werden kann. Ein solches Computerprogramm ist mit Vorteil auf der erwähnten Steuer- und Auswerteeinrichtung ausführbar und kann für eine periodische Überprüfung der Funktionsfähigkeit des Teilchendetektors sorgen.

Das Computerprogramm kann auf geeigneten Datenträgern, wie EEPROMs, Flash-Memories, aber auch auf CD-ROMs, Disketten oder Festplattenlaufwerken gespeichert sein. Eine weitere Möglichkeit besteht im Herunterladen des Computerprogramms beispielsweise über das Internet von einem externen Server.

### Zeichnungen

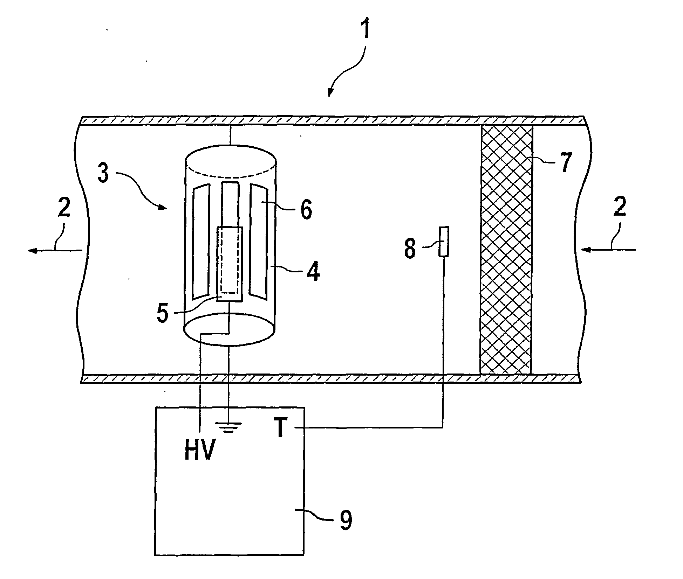

Die Erfindung und ihre Vorteile werden nun in einem Ausführungsbeispiel anhand der beigefügten Figur näher erläutert.

Die Figur zeigt in schematischer Darstellung ein System zur Überprüfung der Funktionsfähigkeit eines Teilchendetektors gemäß Erfindung.

### Bevorzugte Ausführungsform

Die vorliegende Erfindung wird am Beispiel eines Rußdetektors 3 und eines Rußfilters 7 geschildert, die in einer Abgasleitung 1 eines Diesel-Verbrennungsmotors angeordnet sind. Die Figur zeigt die Strömungsrichtung 2 des Abgases in der Abgasleitung 1, den Rußfilter 7 sowie den nachgeschalteten Rußdetektor 3.

Der Rußdetektor 3 weist eine erste Elektrode 5 auf, welche über eine Leitung mit einer Hochspannungsquelle HV verbunden ist. Die zweite Elektrode 4 des Rußdetektors 13 ist zylindrisch ausgebildet und liegt auf Masse. Erste Elektrode 5 und zweite Elektrode 4 sind koaxial zueinander angeordnet. Die zweite Elektrode 4 weist axiale Ausnehmungen 6 auf, durch die Abgas strömen kann. Mit der dargestellten Elektrodenanordnung kann ein Ionenstrom gemessen werden, der durch das Auftreffen geladener Teilchen auf die Elektroden 4 und 5 entsteht. Hierzu wird die Erdleitung und die Hochspannungsleitung in eine Steuer- und Auswerteeinheit 9 geleitet, in der anschließend die weitere Verarbeitung der Signale erfolgt. Selbstverständlich kann die Hochspannungsversorgung auch außerhalb der Steuer- und Auswerteeinheit 9 erfolgen.

Weiterhin ist in Strömungsrichtung 2 hinter dem Rußfilter 7 ein Temperatursensor 8 angeordnet, dessen Signal ebenfalls der Steuer- und Auswerteeinheit 9 an dem mit T bezeichneten Eingang zugeführt wird.

Das in der Figur dargestellte System eignet sich zur Umsetzung des erfindungsgemäßen Verfahrens, bei dem immer dann, wenn der Rußfilter 7 freigebrannt wird, eine Überprüfung der Funktionsfähigkeit des Rußdetektors 3 vorgenommen werden kann. Hierzu wird nach dem Starten des Regeneriervorgangs der Ionenstrom durch den Rußdetektor 3 aufgezeichnet. Der Ionenstrom nimmt im zeitlichen Verlauf zu, wenn geladene Teilchen_den Rußdetektor 3 passieren. Während dessen erfolgt mittels des Temperatursensors 8 eine Temperaturmessung. Während des Regenerierens steigt die Temperatur hinter und in Folge auch am Rußfilter 7, wobei sich gezeigt hat, dass bei erhöhten Temperaturen zwischen 600 und 1.000°C die Ionenkonzentration besonders geeignet ist, um die Funktionsfähigkeit des Rußdetektors 3 zu überprüfen.

Da die Ionenkonzentration mit steigender Temperatur ansteigt, muss bei der Überprüfung des Rußdetektors 3 hiermit ein steigender Ionenstrom verbunden sein. Bleibt dieser aus, liegt mit hoher Wahrscheinlichkeit ein Detektorfehler vor.

Zum Start der Überprüfung der Funktionsfähigkeit wird ein Bit "prüffähig" auf 1 gesetzt. Die Überprüfung erfolgt zusammen mit der Regenerierung des Rußfilters 7. Der vom Rußdetektor 3 während der Regenerier- bzw. Überprüfungsphase erhaltene Strom wird von der Steuer- und Auswerteeinheit 9 erfasst und mit einem Sollwert verglichen. Dieser Sollwert kann empirisch festgelegt werden, geeignet ist ein Modell, das den Sollwert anhand der gemessenen Temperatur und dem Füllgrad des Rußfilters 7 bestimmt. Unterschreitet der von Rußdetektor 3 gemessene Strom den Sollwert um eine festzulegende Grenze, kann der Rußdetektor 3 als fehlerhaft erkannt werden.

Start und Verlauf der Messung sowie die Auswertung erfolgt vorzugsweise mittels eines Computerprogramms, das in der Steuer- und Auswerteeinrichtung 9 enthalten ist.

Die Erfindung erlaubt eine den Normalbetrieb nicht unterbrechende Überprüfung der Funktionsfähigkeit von Teilchendetektoren, insbesondere Rußdetektoren, und erhöht somit die Zuverlässigkeit des Gesamtsystems, insbesondere die Arbeitsweise eines Diesel-Verbrennungsmotors.

## Patentansprüche

1. Verfahren zur Überprüfung der Funktionsfähigkeit eines Teilchendetektors (3) unter Verwendung eines dem Teilchendetektor (3) in Strömungsrichtung (2) vorgeschalteten Teilchenfilters (7),
**dadurch gekennzeichnet,**
**dass** bei der Regeneration des Teilchenfilters (7) entstehende Partikel vom Teilchendetektor (3) erfasst werden und das resultierend Messergebnis mit einem zu erwartenden Ergebnis verglichen wird.

2. Verfahren nach Anspruch 1, **dadurch gekennzeichnet, dass** das zu erwartende Ergebnis der Messung des Teilchendetektors (3) aufgrund des Füllstands des Teilchenfilters (7) und der Regenerationsbedingungen bestimmt wird.

3. Verfahren nach Anspruch 1 oder 2 zur Überprüfung der Funktionsfähigkeit eines Teilchendetektors (3) unter Verwendung des Teilchenfilters (7), der durch Freibrennen regeneriert werden kann, **dadurch gekennzeichnet, dass** während der Regeneration entstehende Ionen vom Teilchendetektor (3) erfasst werden.

4. Verfahren nach Anspruch 3, **dadurch gekennzeichnet, dass** die Temperatur in, am oder in Strömungsrichtung (2) hinter dem Teilchenfilter (7) gemessen und aus dem Füllstand des Teilchenfilters (7) und der gemessenen Temperatur das zu erwartende Ergebnis der Messung des Teilchendetektors (3) bestimmt wird.

5. Verfahren nach einem der Ansprüche 1 bis 4, **dadurch gekennzeichnet, dass** die Abweichung von zu erwartendem Ergebnis mit dem gemessenen Ergebnis bestimmt und mit einem Grenzwert verglichen wird, bei dessen Überschreiten der Teilchendetektor (3) als fehlerhaft eingestuft wird.

6. Verfahren nach einem der Ansprüche 1 bis 5, **dadurch gekennzeichnet, dass** während der Überprüfung der Funktionsfähigkeit des Teilchendetektors (3) die Regenerationsbedingungen verändert werden, insbesondere die Temperatur in der Umgebung des Teilchenfilters (7) erhöht wird.

7. Verfahren nach einem der Ansprüche 3 bis 6, **dadurch gekennzeichnet, dass** zur Regeneration des Teilchenfilters (7) die Temperatur in dessen Umgebung auf oberhalb von 500°C, vorzugsweise auf 600 bis 1.000°C, erhöht wird.

8. System zur Überprüfung der Funktionsfähigkeit eines Teilchendetektors (3) mit einem in Strömungsrichtung (2) einem Teilchenfilter (7) nachgeschalteten Teilchendetektor (3),
**gekennzeichnet durch,**
eine Steuer- und Auswerteeinrichtung (9), die während der Regeneration des Teilchenfilters (7) vom Teilchendetektor (3) gelieferte Messergebnisse erfasst und mit zu erwartenden Ergebnissen vergleicht.

9. System nach Anspruch 8, **dadurch gekennzeichnet, dass** die Steuer- und Auswerteeinrichtung (9) derart ausgelegt ist, dass mittels eines vorgegebenen Modells aus dem aktuellen Füllstand des Teilchenfilters (7) und den jeweiligen Regenerationsbedingungen ein zu erwartendes Messergebnis bestimmt werden kann.

10. System nach Anspruch 8 oder 9, **dadurch gekennzeichnet, dass** ein Temperatursensor (8) in, an oder in Strömungsrichtung (2) hinter dem Teilchenfilter (7) angeordnet ist.

11. Computerprogramm mit Programmcode-Mitteln, um alle Schritte eines Verfahrens nach einem der Ansprüche 1 bis 7 durchzuführen, wenn das Computerprogramm auf einem Computer oder einer entsprechenden Rechnereinheit, ausgeführt wird.

12. Computerprogrammprodukt mit Programmcode-Mitteln, die auf einem computerlesbaren Datenträger gespeichert sind, um ein Verfahren nach einem der Ansprüche 1 bis 7 auszuführen, wenn das Computerprogrammprodukt auf einem Computer oder einer entsprechenden Rechnereinheit, ausgeführt wird.

## Claims

1. Method for verifying the functionality of a particle detector (3) using a particle filter (7) which is connected upstream of the particle detector (3) in the direction of flow (2), **characterized in that** particulates which are formed during the regeneration of the particle filter (7) are recorded by the particle detector (3), and the resulting measurement result is compared with an expected result.

2. Method according to Claim 1, **characterized in that** the expected result of the measurement by the particle detector (3) is determined on the basis of the filling level of the particle filter (7) and the regeneration conditions.

3. Method according to Claim 1 or 2, for verifying the functionality of a particle detector (3) using the particle filter (7), which can be regenerated by burning off, **characterized in that** ions formed during the regeneration are recorded by the particle detector (3).

4. Method according to Claim 3, **characterized in that** the temperature in, at or downstream of (in the direction of flow (2)) the particle filter (7) is measured, and the expected result of the measurement by the particle detector (3) is determined from the filling level of the particle filter (7) and the measured temperature.

5. Method according to one of Claims 1 to 4, **characterized in that** the deviation of the measured result from the expected result is determined and compared with a limit value, and if this limit value is exceeded, the particle detector (3) is categorized as defective.

6. Method according to one of Claims 1 to 5, **characterized in that** while the functionality of the particle detector (3) is being verified, the regeneration conditions are altered, in particular the temperature in the vicinity of the particle filter (7) is increased.

7. Method according to one of Claims 3 to 6, **characterized in that** to regenerate the particle filter (7) the temperature in its vicinity is increased to over 500°C, preferably to 600 to 1000°C.

8. System for verifying the functionality of a particle detector (3), having a particle detector (3) connected downstream of a particle filter (7) in the direction of flow (2), **characterized by** a control and evaluation device (9) which records measurement results delivered by the particle detector (3) during the regeneration of the particle filter (7) and compares these measurement results with expected results.

9. System according to Claim 8, **characterized in that** the control and evaluation device (9) is designed in such a manner that an expected measurement result can be determined from the current filling level of the particle filter (7) and the prevailing regeneration conditions by means of a predetermined model.

10. System according to Claim 8 or 9, **characterized in that** a temperature sensor (8) is arranged in, at or downstream of (in the direction of flow (2)) the particle filter (7).

11. Computer program having program code means for carrying out all the steps of a method according to one of Claims 1 to 7 when the computer program is executed on a computer or a corresponding processor unit.

12. Computer program product having program code means which are stored on a computer-readable data carrier in order to carry out a method according to one of Claims 1 to 7 when the computer program product is executed on a computer or a corresponding processor unit.

## Revendications

1. Procédé de vérification du bon fonctionnement d'un détecteur de particules (3) en utilisant un filtre de particules (7) situé en amont du détecteur de particules (3) dans la direction d'écoulement (2),
**caractérisé en ce qu'**
on détecte par le détecteur de particules (3), des particules obtenues lors de la régénération du filtre de particules (7) et on compare le résultat de mesure avec un résultat prévisible.

2. Procédé selon la revendication 1,
**caractérisé en ce qu'**
on détermine le résultat prévisible de la mesure du détecteur de particules (3), en fonction du niveau de remplissage du filtre de particules (7) et des conditions de régénération.

3. Procédé selon la revendication 1 ou 2 pour vérifier le bon fonctionnement d'un détecteur de particules (3) en utilisant un filtre de particules (7) qui peut être régénéré par combustion libre,
**caractérisé en ce qu'**
ont détecte par le détecteur de particules (3), des ions générés lors de la régénération.

4. Procédé selon la revendication 3,
**caractérisé en ce qu'**
on mesure la température dans ou sur le filtre à particules (7) ou dans la direction d'écoulement (2) en aval de celui-ci, et on détermine le résultat prévisible de la mesure du détecteur de particules (3) à partir du niveau de remplissage du filtre de particules (7) et de la température mesurée.

5. Procédé selon l'une quelconque des revendications 1 à 4,
**caractérisé en ce qu'**
on détermine l'écart entre le résultat prévisible et le résultat de mesure, et on le compare avec une valeur limite, et si celle-ci est dépassée, le détecteur de particules (3) est classé comme défectueux.

6. Procédé selon l'une quelconque des revendications 1 à 5,
**caractérisé en ce que**
pendant la vérification du bon fonctionnement du détecteur de particules (3), on modifies les conditions de régénération, en particulier en augmentant la température dans l'environnement du filtre de particules (7).

7. Procédé selon l'une quelconque des revendications 3 à 6,
**caractérisé en ce que**
pour la régénération du filtre de particules (7), on élève la température dans l'environnement de celui-ci au-dessus de 500°C, de préférence entre 600 et 1 000°C.

8. Système de vérification du bon fonctionnement d'un détecteur de particules (3) avec un détecteur de particules (3) situé en aval d'un filtre de particules (7) dans la direction d'écoulement (2),
**caractérisé par**
un dispositif de commande et d'exploitation (9) qui, pendant la régénération du filtre de particules (7), détecte des résultats de mesure fournis par le détecteur de particules (3) et les compare avec des résultats prévisibles.

9. Système selon la revendication 8,
**caractérisé en ce que**
le dispositif de commande et d'exploitation (9) est conçu pour permettre de déterminer, au moyen d'un modèle prédéfini, un résultat de mesure prévisible à partir du niveau de remplissage actuel du filtre de particules (7) et des conditions de régénération respectives.

10. Système selon la revendication 8 ou 9,
**caractérisé en ce qu'**
un capteur de température (8) est disposé dans ou sur le filtre à particules (7) ou en aval de celui-ci dans la direction d'écoulement (2).

11. Programme informatique avec des moyens de code de programme pour exécuter toutes les étapes d'un procédé selon l'une quelconque des revendications 1 à 7, si le programme informatique est exploité sur un ordinateur ou une unité de calculateur correspondante.

12. Produit de programme informatique avec des moyens de code de programme stockés sur un support de données lisible par ordinateur pour exécuter un procédé selon l'une quelconque des revendications 1 à 7, si le produit de programme informatique est exploité sur un ordinateur ou une unité de calculateur correspondante.
